# EUROPEAN PATENT APPLICATION

(11) **EP 2 306 301 A2**
(43) Date of publication of application: **06.04.2011**
(21) Application number: 10155079.6
(22) Date of filing: 01.03.2010
(51) Int. Cl.: G06F 3/12

(54) **Image processing system, image processing method and image processing program**

(30) Priority: 25.09.2009 JP 2009219933
(71) Applicant: Fuji Xerox Co., Ltd., Minato-ku, Tokyo (JP)
(72) Inventor: Hayakawa, Michio, Saitama-shi Saitama (JP)
(74) Representative: Ward, James Norman

(57) **Abstract**

An image processing system includes a plurality of intermediate data generating sections that analyzes distributed data of document data described in a page description language, and generates intermediate data; and a plurality of drawing data generating sections that acquires the intermediate data from the plurality of intermediate data generating sections and generates drawing data including information of pixels of a print image based on the acquired intermediate data. The plurality of intermediate data generating sections generates the intermediate data by pages of the document data. The plurality of drawing data generating sections corresponds to a plurality of different basic colors and generates the drawing data for the corresponding basic colors.

## Description

### BACKGROUND

### 1. Technical Field

The present invention relates to an image processing system, an image processing method and an image processing program.

### 2. Related Art

A technique of processing print data in parallel by the use of plural RIPs (Raster Image Processors) to speed up a printout operation has been proposed. The RIP is hardware for developing data described in a page description language (PDL) such as PostScript (registered trademark) into raster data which can be printed or displayed.

For example, a technique of allowing plural unit controllers to perform image forming processes by color components in parallel in a system for printing plural colors is disclosed in Patent Document 1 (JP-B-3488157). In the system described in Patent Document 1, digital data to be printed are divided into plural color components and plural unit controllers corresponding to the plural color components generate raster data of the corresponding color components, respectively. The raster data means data in which an image is expressed in arrangements of colored dots.

Patent Document 2 (JP-A-2001-134389) discloses a technique of dividing a print job described in the page description language into pages and allowing plural RIPs to perform processes of rasterizing the print job divided into the pages in parallel.

Patent Document 3 (JP-A-7-237336) discloses a technique of allowing one of two printer controllers controlling two printers, respectively, to process front print data in double-side printing to generate print image data as raster data, and allowing the other printer controller to process back print data in the double-side printing to generate print image data as raster data.

In the technique of processing print data in parallel by basic colors in color printing to generate raster data, with different processing loads for plural basic colors, the printing of the entire target document is not finished until the processing of a basic color having the heaviest load is finished, even when the processing of the other basic colors is finished. That is, in spite of the parallel processing by the basic colors, the processing of the basic color having the heaviest load hinders the improvement of the entire processing speed. On the contrary, in the technique of processing print data by pages in parallel to generate raster data, the entire processing speed is not influenced by the difference in processing load between the basic colors. However, when a color printing operation is performed with the technique of processing print data by pages in parallel, it is necessary to separate the generated raster data by the basic colors and to transmit the separated raster data to print controllers corresponding to the basic colors. For example, since the data amount of the raster data is greater than that of data described in the PDL, the process of transmitting the raster data may hinder the improvement of the printing speed. On the other hand, in the technique of processing print data by the basic colors in parallel, since processors corresponding to the basic colors, respectively, serve as print controllers of the basic colors, it is not necessary to transmit the raster data.

### SUMMARY

An object of the invention is to provide an image processing system, an image processing method and an image processing program which can process print data more efficiently than the technique of processing print data in parallel by the basic colors in color printing and which can reduce the data amount to be transmitted in comparison with the technique of processing print data in parallel by pages.
[1] According to an aspect of the invention, an image processing system includes a plurality of intermediate data generating sections and a plurality of drawing data generating sections. The plurality of intermediate data generating sections analyze distributed data of document data described in a page description language, and generate intermediate data. The plurality of drawing data generating sections acquire the intermediate data from the plurality of intermediate data generating sections and generate drawing data including information of pixels of a print image based on the acquired intermediate data. The plurality of intermediate data generating sections generate the intermediate data by pages of the document data. The plurality of drawing data generating sections correspond to a plurality of different basic colors and generate the drawing data for the corresponding basic colors.
[2] According to the image processing system of [1], the plurality of intermediate data generating sections may generate the intermediate data of the pages by the plurality of different basic colors and may output the intermediate data of the basic colors to the drawing data generating sections corresponding to the basic colors, respectively. The plurality of drawing data generating sections may acquire the intermediate data of the corresponding basic colors from the plurality of intermediate data generating sections, respectively, and may generate the drawing data of the corresponding basic colors using the acquired intermediate data.
[3] According to the image processing system of [1], the plurality of intermediate data generating sections may generate the intermediate data of the pages by the plurality of different basic colors and may output all the generated intermediate data to the plurality of drawing data generating sections. The plurality of drawing data generating sections may generate the drawing data of the corresponding basic colors using the intermediate data of the corresponding basic colors out of the intermediate data acquired from the plurality of intermediate data generating sections.
[4] According to the image processing system of any of one of [1] to [3], the plurality of intermediate data generating sections may generate the intermediate data further including information for specifying common elements which are elements in common in the pages of the document data out of the elements of the document data. The plurality of drawing data generating sections, may (i) each includes a storage section that stores the drawing data generated in accordance with a drawing command for the common elements included in the acquired intermediate data, (ii) store the drawing data of the common elements in the storage sections when the drawing data of the common elements included in the intermediate data to be processed from which the drawing data is generated is not stored in the storage sections, and (iii) generate the drawing data using the drawing data read from the storage sections when the drawing data of the common elements included in the intermediate data to be processed from which the drawing data is generated is stored in the storage sections.
[5] According to the image processing system of [4], one intermediate data generating section determined in accordance with a predetermined condition out of the plurality of intermediate data generating section that generate the intermediate data of the pages including the common elements in the document data may generate the drawing command of the common elements and may output the drawing command to the plurality of drawing data generating sections. The other intermediate data generating sections may not generate the drawing command of the common elements.
[6] According to the image processing system according of [5], the plurality of drawing data generating sections may store the drawing command of the common elements generated by the one intermediate data generating section in the storage sections. The plurality of drawing data generating sections may generate the drawing data using the drawing commands read from the storage sections when the drawing commands of the common elements included in the intermediate data to be processed from which the drawing data is generated are stored in the storage sections.
[7] According to the image processing system of any one of [4] to [6], the intermediate data may further include information indicating a hierarchical relation in the print image between the elements of the document data including the common elements. The plurality of drawing data generating sections may generate the drawing data further based on the information indicating the hierarchical relation included in the intermediate data.
[8] According to the image processing system of any one of [1] to [7], the intermediate data may include the drawing command indicating a drawing sequence of scanning lines included in the drawing data of each element of the document data.
[9] According to another aspect of the invention, an information processing method includes: by a plurality of intermediate data generating sections, analyzing distributed data of document data described in a page description language, and generating intermediate data; and by a plurality of drawing data generating sections, acquiring the intermediate data from the plurality of intermediate data generating sections and generating drawing data including information of pixels of a print image based on the acquired intermediate data. The plurality of intermediate data generating sections generate the intermediate data by pages of the document data. The plurality of drawing data generating sections correspond to a plurality of different basic colors and generate the drawing data for the corresponding basic colors.
[10] According to another aspect of the invention, a program causing a computer to execute a process for processing print data in parallel, the process includes: by a plurality of intermediate data generating sections, analyzing distributed data of document data described in a page description language, and generating intermediate data; and by a plurality of drawing data generating sections, acquiring the intermediate data from the plurality of intermediate data generating sections and generating drawing data including information of pixels of a print image based on the acquired intermediate data. The plurality of intermediate data generating sections generate the intermediate data by pages of the document data. The plurality of drawing data generating sections correspond to a plurality of different basic colors and generate the drawing data for the corresponding basic colors.
   With the configuration of [1], [9] or [10], it is possible to process print data more efficiently than the technique of processing print data in parallel by the basic colors in color printing and to reduce the data amount to be transmitted in comparison with the technique of processing print data in parallel by pages.
   With the configuration of [2], it is possible to allow the drawing data generating section to perform a process of acquiring only the intermediate data of the corresponding basic colors and generating the drawing data.
   With the configuration of [3], it is possible to generate the drawing data by the parallel process for the basic colors without separating the intermediate data generated by the intermediate data generating section by the basic colors and outputting the separated intermediate data to the drawing data generating section.
   With the configuration of [4], it is possible to generate the drawing data reusing the drawing data of the common elements included in common in the plural pages.
   With the configuration of [5], it is possible to generate the drawing data of the plural pages including the common elements by allowing only one intermediate data generating section to generate the drawing command of each common element.
   With the configuration of [6], it is possible to generate the drawing data reusing the intermediate data of the common elements.
   With the configuration of [7], it is possible to set up the hierarchical relation between the elements of the document data including the common elements and thus to generate the drawing data based on the setup.
   With the configuration of [8], it is possible to generate the intermediate data including the sequence of drawing the elements of the document data by the scanning lines.

### BRIEF DESCRIPTION OF THE DRAWINGS

Exemplary embodiment(s) of the present invention will be described in detail based on the following figures, wherein:
Fig. 1 is a block diagram illustrating a configuration of an image processing system;
Fig. 2 is a block diagram schematically illustrating an internal configuration of a print job processor;
Fig. 3 is a diagram schematically illustrating an example of a target document;
Fig. 4 is a diagram illustrating an example of intermediate data;
Fig. 5 is a block diagram illustrating internal configurations of a drawing processor and a printer;
Fig. 6 is a block diagram illustrating a configuration of a drawing data generator;
Fig. 7 is a diagram illustrating a data process flow in an analyzer and the drawing data generator;
Fig. 8 is a flowchart illustrating a flow of processes in the print job processor and the drawing processor;
Fig. 9 is a block diagram illustrating another configuration of the drawing data generator;
Fig. 10 is a block diagram illustrating another configuration of the drawing data generator;
Fig. 11 is a block diagram illustrating configurations of the drawing processor and the printer;
Fig. 12 is a diagram illustrating another data process flow in the analyzer and the drawing data generator;
Fig. 13 is a block diagram illustrating another configuration of the drawing data generator;
Fig. 14 is a diagram illustrating another data process flow in the analyzer and the drawing data generator;
Fig. 15 is a flowchart illustrating a flow of processes in the drawing data generator;
Fig. 16 is a diagram illustrating another data process flow in the analyzer and the drawing data generator;
Fig. 17 is a flowchart illustrating a flow of processes in the analyzer;
Fig. 18 is a diagram illustrating another data process flow in the analyzer and the drawing data generator;
Fig. 19 is a diagram illustrating an example of the intermediate data generated by the analyzer;
Fig. 20 is a diagram illustrating another example of the intermediate data generated by the analyzer; and
Fig. 21 is a diagram illustrating a hardware configuration of a computer.

### DETAILED DESCRIPTION

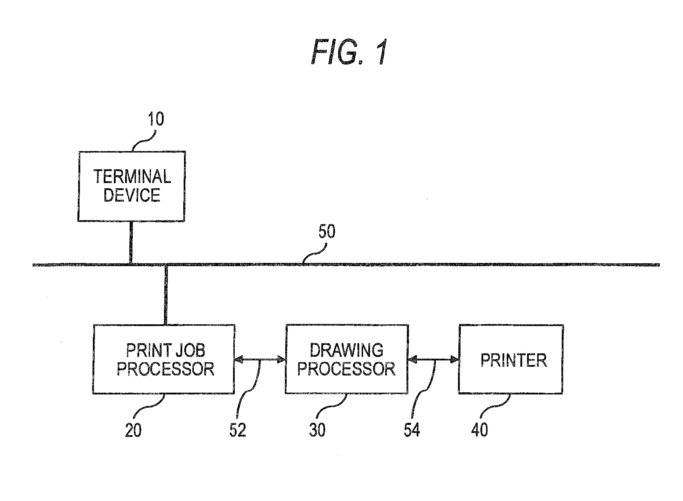

Fig. 1 is a block diagram illustrating a configuration of an image processing system. The system shown in Fig. 1 includes a terminal device 10, a print job processor 20, a drawing processor 30, and a printer 40. The terminal device 10 is connected to the print job processor 20 via a communication line 50 and transmits a print job including a document printing command to the print job processor 20 in accordance with a user's instruction. The print job processor 20 is connected to the drawing processor 30 via communication line 52 and the drawing processor 30 is connected to the printer via communication line 54. The communication line 50, 52, and 54 may be a network such as a LAN (Local Network). The communication lines 50, 52, and 54 may be one common communication means or may be different communication means.

In the system shown in Fig. 1, the print job transmitted from the terminal device 10 is processed by the print job processor 20, the resultant data is transmitted to the drawing processor 30, and a printing operation is performed by the printer 40 based on the drawing data generated by the drawing processor 30.

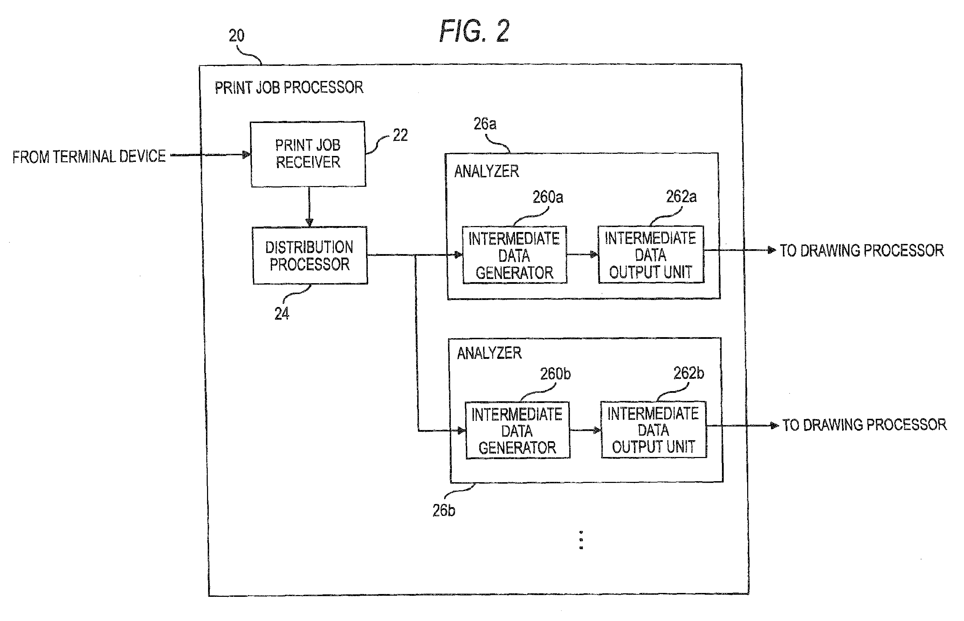

Fig. 2 is a diagram schematically illustrating an internal configuration of the print job processor 20. The print job processor 20 includes a print job receiver 22, a distribution processor 24, and plural analyzers 26a, 26b, ... (may be referred to as "analyzer 26").

The print job receiver 22 receives a print job from the terminal device 10. In this exemplary embodiment, the print job includes a document printing command and data in which a target document is described in a page description language. The page description language is a computer program language for allowing an information processor to perform a display process, a printing process, and the like. The data described in the page description language includes position information, form information, and color information of objects such as characters or figures of a target document. In the following description, the data in which a target document is described in the page description language is called "PDL". The print job receiver 22 sends the PDL included in the received print job to the distribution processor 24.

The distribution processor 24 determines what page of the pages included in the PDL acquired from the print job receiver 22 should be processed by the respective analyzers 26a, 26b, .... The distribution processor 24 determines the pages to be processed by the analyzers 26a, 26b, ... based on operation states of the analyzers 26a, 26b, .... For example, priority is given to the analyzer 26 not performing a process or the analyzer 26 performing a process with a load lower than that of the other analyzers 26 and the processing pages are sequentially distributed from the first page of the PDL. The distribution processor 24 sends the distributed pages and s the PDL acquired from the print job receiver 22 to the analyzers 26a, 26b, .... In this exemplary embodiment, the entire PDL in addition to the corresponding pages in the PDL are sent to the analyzers 26a, 26b, .... In a modified example, the distribution processor 24 may distribute the pages of the PDL to the analyzers 26a, 26b, ... and may send the divided pages to the corresponding analyzers 26a, 26b, ... based on the distribution.

The analyzer 26 analyzes the PDL acquired from the distribution processor 24, generates the intermediate data including a command indicating the generation order of the drawing data for the corresponding pages sent from the distribution processor 24, and outputs the generated intermediate data. The analyzer 26 includes an intermediate data generator 260 and an intermediate data output unit 262.

The intermediate data generator 260 analyzes the PDL and generates intermediate data, which is separated by the basic colors used in printing of the printer 40, for the corresponding page. Here, the intermediate data generated by analyzing the PDL, and data in the stage before it is converted into data finally output to a print engine. An example of the intermediate is a display list. An example where four basic colors of yellow (Y), magenta (M), cyan (C), and black (K) are used will be described below. The intermediate data includes a drawing command indicating the sequence of drawing objects, which are elements of a document to be printed, in a print image of the document. A language expressing a sequence more detailed than the page description language is used as a language describing the drawing command. For example, when information indicating a position, a shape, and a size of an object in the print image is defined in the page description language, the sequence of drawing the object in the unit of scanning line in the print image may be described in the drawing command of the object in the intermediate data.

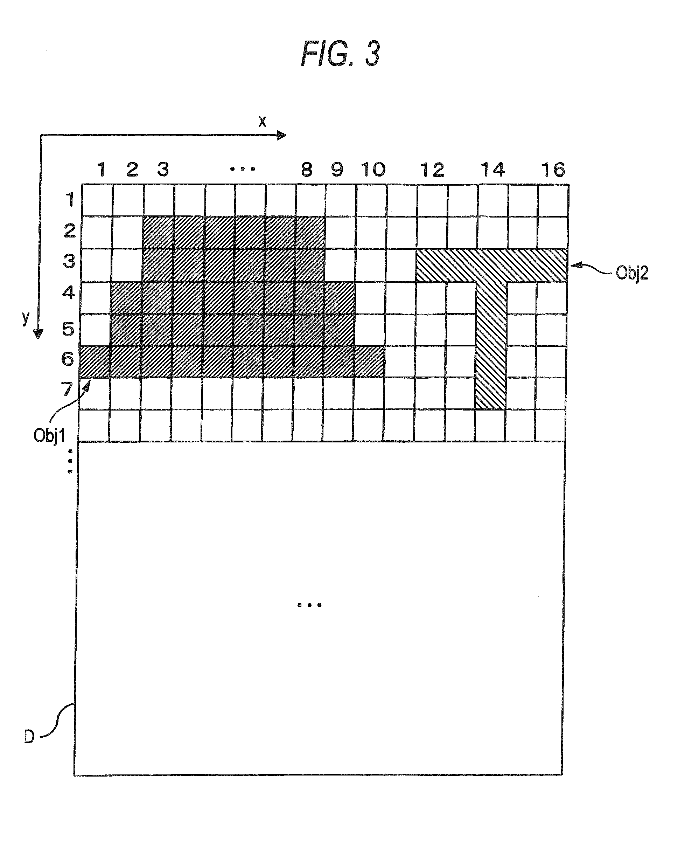

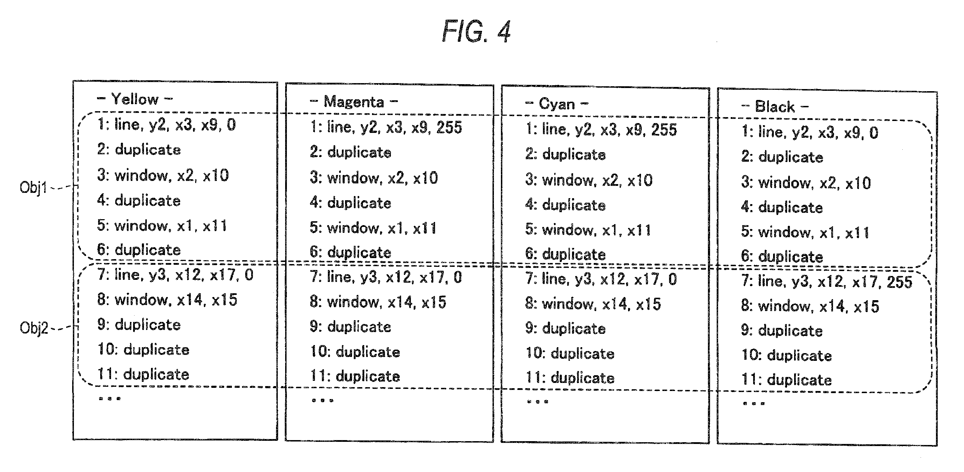

A specific example of the intermediate data will be described below with reference to Figs. 3 and 4. Fig. 3 is a diagram schematically illustrating an example of the document to be printed. Fig. 4 is a diagram illustrating an example of the intermediate data corresponding to the example shown in Fig. 3. Document D in the example shown in Fig. 3 is a document including one page. Document D includes two objects Obj 1 (hatched portion) and Obj2 (black portion). In Fig. 3, rule marks in document D are for explanation and are not elements of document D. The PDL indicating document D includes descriptions of the colors, positions, shapes, and sizes of the objects Obj1 and Obj2. The positions of the objects are expressed by coordinates in which the left-upper corner of document D is used as an origin, the left-right direction is an x axis, and the up-down direction is a y axis. Fig. 4 shows an example of the intermediate data generated by causing the analyzer 26 to analyze the PDL of document D in the example shown in Fig. 3. Referring to Fig. 4, the intermediate data of Y, M, C, and K include the drawing command of Obj1 rows 1 to 6) and the drawing command of Obj2 (rows 7 to 11). Each row of the drawing command corresponds to one scanning line (one row in the x axis direction in Fig. 3) in the print image of document D. The intermediate data shown in Fig. 4 includes drawing commands described in the format of "line", "duplicate", and "window". The formats mean the followings.

### (1) line, Y, M, xl, xr, c

In the scanning line of ym in the y coordinates, an image is drawn with gray scale c from xl to xr-l in the x coordinates.

### (2) duplicate

An image is drawn in the same shape (x coordinates and gray scale) as the scanning line drawn just before.

### (3) window, xl, xr

An image is drawn with the same gray scale as the scanning line drawn just before from xl to xr-l in the x coordinates.

As shown in Fig. 4, the intermediate data of a page can be understood as a set of commands indicating drawing sequences of the objects of the page. The data amount of the intermediate data of one page is smaller than that of the raster data including the values of the pixels of the page.

The intermediate data may further express a hierarchical relation of the objects in the print image. The hierarchical relation of the objects means the hierarchical relation in a hierarchical structure of an image. That is, the "upper" in the relation of the objects means a viewing-surface side (side close to a viewer and referred to as a front side) and the "lower" means a non-viewing-surface side (side apart from the viewer and referred to as a back side). Accordingly, an expression "object B is disposed on object A" means that object B obscures the viewing-surface side (front side) of object A. For example, in the intermediate data, the hierarchical relation of the objects is expressed by describing the drawing commands of the objects sequentially from the object disposed in the lowermost (or uppermost) in the print image.

Referring to Fig. 2 again, the intermediate data output unit 262 outputs the separated intermediate data to the drawing processor 30.

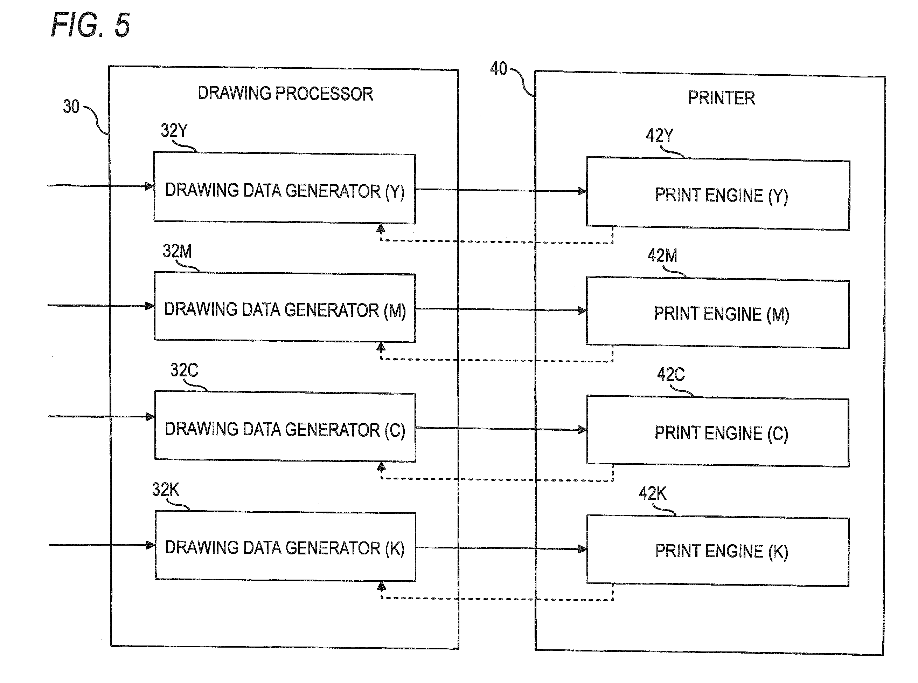

Schematic configurations of the drawing processor 30 and the printer 40 are shown in Fig. 5. The printer 40 includes print engines 42Y, 42M, 42C, and 42K printing the separations of four basic colors Y, M, C, and K, respectively. The drawing processor 30 includes drawing data generators 32Y, 32M, 32C, and 32K corresponding to the print engines 42Y, 42M, 42C, and 42K of the printer 40.

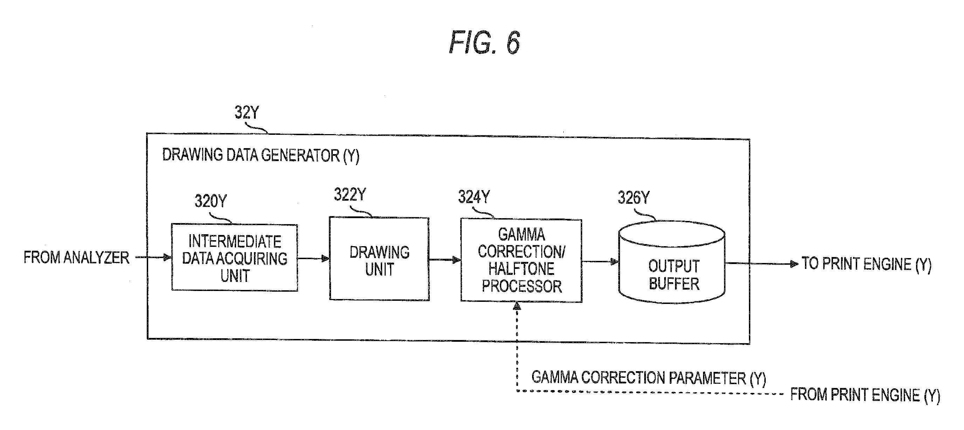

The drawing data generators 32Y, 32M, 32C, and 32K acquire the intermediate data of the corresponding basic colors from the analyzers 26 of the print job processor 20, and generate the drawing data of the corresponding basic colors using the acquired intermediate data. Configurations of the drawing data generators 32 are shown in Fig. 6 using the drawing data generator 32Y The drawing data generators 32M, 32C, and 32K corresponding to the other basic colors M, C, and K may have the same configuration as shown in Fig. 6.

Referring to Fig. 6, the drawing data generator 32Y includes an intermediate data acquiring unit 320Y, a drawing unit 322Y, a gamma correction/halftone processor 324Y, and an output buffer 326Y The intermediate data acquiring unit 320Y acquires the intermediate data of the corresponding basic color Y from the analyzers 26a and 26b of the print job processor 20 and sends the acquired intermediate data to the drawing unit 322Y The drawing unit 322Y generates the drawing data based on the intermediate data sent from the intermediate data acquiring unit 320Y The generated drawing data is raster data including the pixel values of the basic color Y of the pixels of the print image in this exemplary embodiment. The gamma correction/halftone processor 324Y performs a gamma correcting process and a halftone process on the drawing data generated by the drawing unit 322Y. The gamma correction/halftone processor 324Y performs the gamma correcting process using parameters acquired from the print engine 42Y taking charge of the operation of printing the separation of the basic color Y in the printer 40. The drawing data processed by the gamma correction/halftone processor 324Y is stored in the output buffer 326Y and is then output to the print engine 42Y. The output buffer 326Y is a memory device temporarily storing the drawing data to be output. The separation of the basic color Y is printed by the print engine 42Y using the drawing data. The print engine is not limited to an electrophotographic engine, but may be an ink jet type or other type.

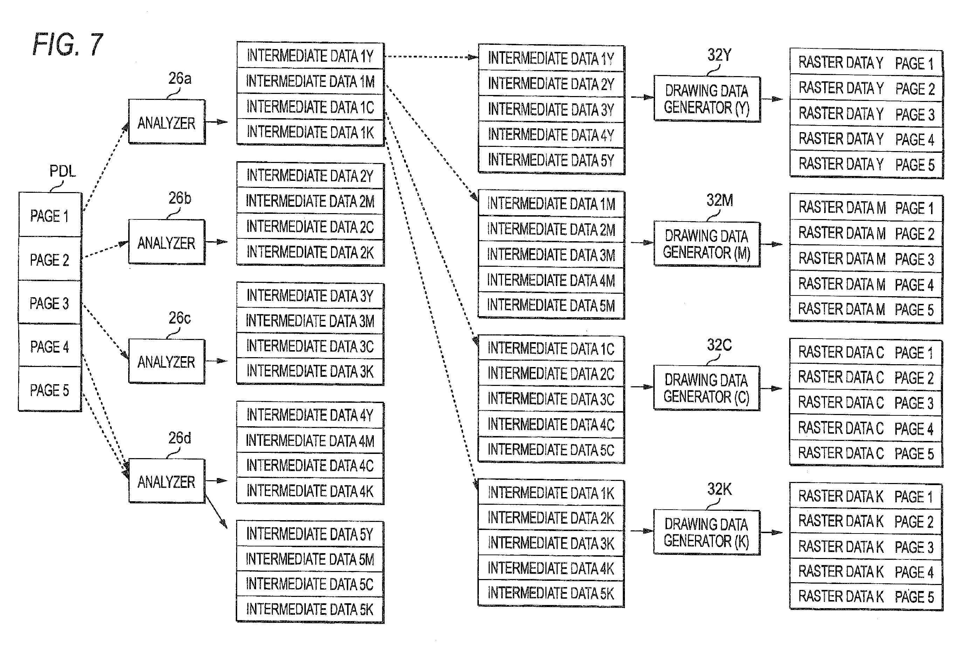

A flow of processes in the analyzers 26 of the print job processor 20 and the drawing data generators 32 of the drawing processor 30 will be described with reference to Fig. 7. In the example shown in Fig. 7, the print job processor 20 includes four analyzers 26a, 26b, 26c, and 26d, and the drawing processor 30 includes the drawing data generators 32Y, 32M, 32C, and 32K as shown in Fig. 5. Fig. 7 shows an example of the PDL of a document including five pages of Page 1 to Page 5. In Fig. 7, the broken arrows directed to one of the analyzers 26a to 26d from the respective pages Page 1 to Page 5 indicate the analyzers 26 taking charge of the processes of the pages. Pages 1, 2, and 3 are processed by the analyzers 26a, 26b, and 26c, respectively, and Pages 4 and 5 are processed by the analyzer 26d. The analyzers 26 analyze the PDL and generate the intermediate data in which the corresponding pages are separated by the basic colors Y, M, C, and K. For example, the analyzer 26a generates the intermediate data 1Y, the intermediate data 1M, the intermediate data 1C, and the intermediate data 1K of Page 1. The intermediate data generated by the analyzers 26 is output to the corresponding drawing data generators 32Y, 32M, 32C, and 32K by the basic colors of Y, M, C, and K. Accordingly, the drawing data generators 32Y, 32M, 32C, and 32K acquire the intermediate data of the corresponding basic colors from the analyzers 26a to 26d. For example, the drawing data generator 32Y acquires the intermediate data 1Y, the intermediate data 2Y, and the intermediate data 3Y of the basic color Y of Pages 1, 2, and 3 from the analyzers 26a, 26b, and 26c, respectively, and acquires the intermediate data 4Y and the intermediate data 5Y of the basic color Y of Pages 4 and 5 from the analyzers 26d. The drawing data generators 32Y, 32M, 32C, and 32K each generate the raster data of the pages of the corresponding basic color using the acquired intermediate data. For example, the drawing data generator 32Y generates the raster data Y of the basic color Y of Page 1 to Page 5. The raster data of the basic colors of the pages are output to the print engines 42Y, 42M, 42C, and 42K of the basic colors.

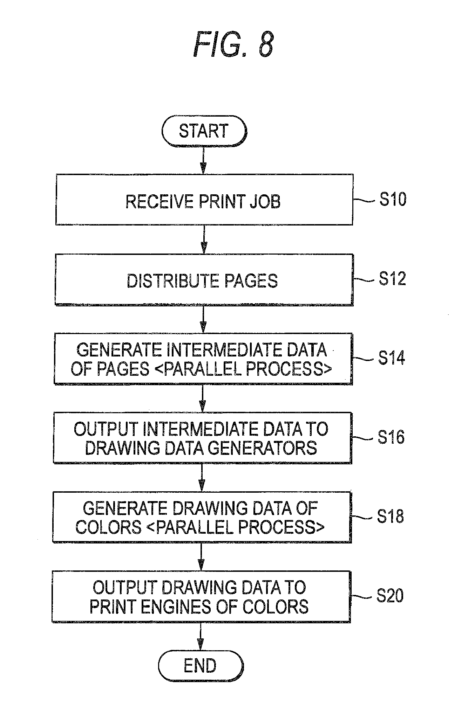

The operation of the system shown in Fig. 1 will be described with reference to Fig. 8. Fig. 8 is a flowchart illustrating the flow of processes performed by the print job processor 20 and the drawing processor 30. The processes of steps S10 to S16 in Fig. 8 are performed by the print job processor 20 and the processes of steps S18 and S20 are performed by the drawing processor 30.

First, a print job from the terminal device 10 is received by the print job receiver 22 of the print job processor 20 (step S10).

Then, the distribution processor 24 determines the analyzers 26 taking charge of the processes of pages in the PDL included in the print job received in step S10 depending on the operating states of the analyzers 26. That is, the distribution processor 24 distributes the pages of the PDL to the analyzers 26 (step S12).

The analyzers 26 acquire the PDL to be processed from the distribution processor 24 along with the notification of the corresponding pages distributed in step S12. The analyzers analyze the acquired PDL, specify the corresponding pages, and generate the intermediate data separated by the basic colors of Y, M, C, and K for the pages (step S14). In step S14, the analyzers 26 perform a parallel process in the unit of pages.

The analyzers 26 output the generated intermediate data (Y, M, C, and K) to the drawing data generators 32Y, 32M, 32C, and 32K corresponding to the basic colors in the drawing processor 30 (step S16).

The drawing data generators 32Y, 32M, 32C, and 32K each generate the page drawing data of the corresponding basic color using the intermediate data of the basic colors acquired from the analyzers 26 (step S18). In step S18, the drawing data generators 32 cause the drawing unit 322 to process the acquired intermediate data and to calculate the values of pixels of the print image, thereby generating the raster data. The gamma correction/halftone processor 324 performs the gamma correction process and the halftone process on the generated raster data. In step S18, the parallel process in the unit of basic colors is performed by the four drawing data generators 32Y, 32M, 32C, and 32K.

The page raster data having been subjected to the gamma correction process and the halftone process by the drawing data generators 32Y, 32M, 32C, and 32K is stored in the output buffer 326 and then is output to the print engine 42Y, 42M, 42C, and 42K corresponding to the basic colors (step S20).

In the above-mentioned exemplary embodiment, the corresponding pages of the analyzers 26 are determined depending on the operating states of the analyzers 26 and the PDL is analyzed in parallel in the unit of pages. The drawing data is generated in parallel by the basic colors of separations in the printing by the drawing data generators 32. Accordingly, the drawing data generators 32 store the gamma correction parameters acquired from the print engines 42 of the corresponding basic colors. The drawing data generators need not hold the gamma correction parameters of the print engines 42 of the other basic colors.

In the above-mentioned exemplary embodiment, the analyzers 26 output the generated intermediate data of the basic colors to only the drawing data generators 32 corresponding to the basic colors. That is, the drawing data generators 32 each acquire only the intermediate data of the corresponding basic color. In another example, the drawing data generators 32 may acquire the intermediate data of all the basic colors. In this example, the analyzers 26 output all the generated intermediate data to four drawing data generators 32Y, 32M, 32C, and 32K, respectively.

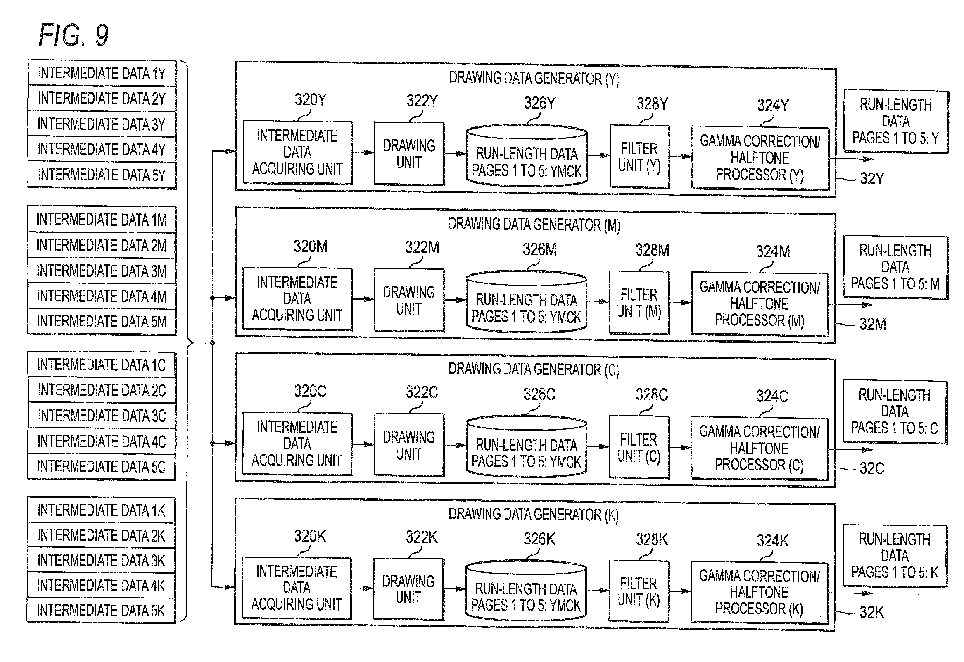

Fig. 9 shows the configurations and the data processes of the drawing data generators when the drawing data generators 32 acquire the intermediate data of all the basic colors. The intermediate data shown in Fig. 9 is similar to the intermediate data generated by the analyzers 26a to 26d in the example shown in Fig. 7. In Fig. 9, the drawing data generators 32Y, 32M, 32C, and 32K acquire the intermediate data of all the basic colors Y, M, C, and K for each page of Pages 1 to 5. The same elements as shown in Fig. 6 out of the elements of the drawing data generators 32 shown in Fig. 9 are referenced by the same reference numerals and signs as shown in Fig. 6. Fig. 9 is different from Fig. 6, in that each drawing data generator 32 includes a filter unit 328 of the corresponding basic color in addition to the intermediate data acquiring unit 320, the drawing unit 322, the gamma correction/halftone processor 324, and the output buffer 326. The filter unit 328 receives data including plural color components as an input and performs a filtering process of extracting and outputting only the data of the corresponding basic color. In the example shown in Fig. 9, the drawing unit 322 generates run-length data as the drawing data instead of the raster data. The run-length data is drawing data including information indicating the number of pixels having the same pixel value for the corresponding basic color continuously every scanning line of the print image. The drawing units 322 shown in Fig. 9 generate the run-length data including the data of all the basic colors of Y, M, C, and K and write the generated run-length data to the output buffers 326. The filter units 328 read the run-length data from the output buffers 326, extract the corresponding run-length data from the read run-length data, and outputs the extracted run-length data to the gamma correction/halftone processors 324. The run-length data processed by the gamma correction/halftone processors 324 is output to the print engines 42 of the corresponding basic colors.

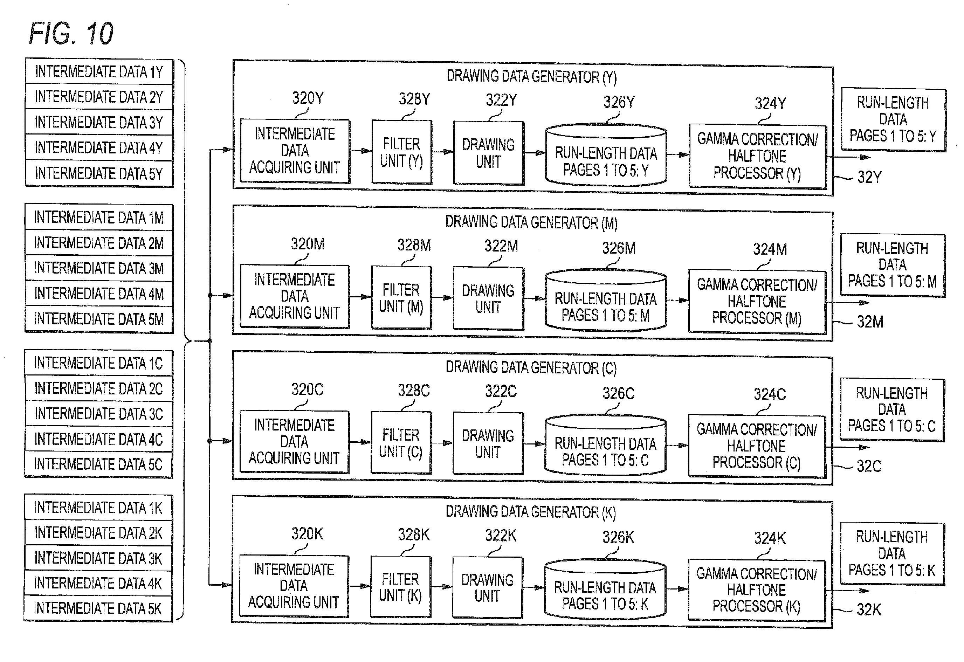

Fig. 10 shows another configuration of the drawing data generator 32 when the drawing data generators 32 acquire the intermediate data of all the basic colors. The elements of the drawing data generators 32 shown in Fig. 10 are the same as shown in Fig. 9. However, in the example shown in Fig. 10, the processing sequence of the drawing unit 322 and the filter unit 328 is different that shown in Fig. 9. In the example shown in Fig. 10, each filter unit 328 receives the intermediate data (including all the data of Y, M, C, and K) acquired by the corresponding intermediate data acquiring unit 320 as an input, extracts the intermediate data of the corresponding basic color, and outputs the extracted intermediate data to the corresponding drawing unit 322. The drawing unit 322 generates the run-length data of the corresponding basic color using only the intermediate data of the corresponding basic color, and writes the generated run-length data to the output buffer 326. Each gamma correction/halftone processor 324 performs the gamma correction process and the halftone process on the run-length data read from the corresponding output buffer 326, and then outputs the resultant run-length data to the print engine 42 of the corresponding basic color.

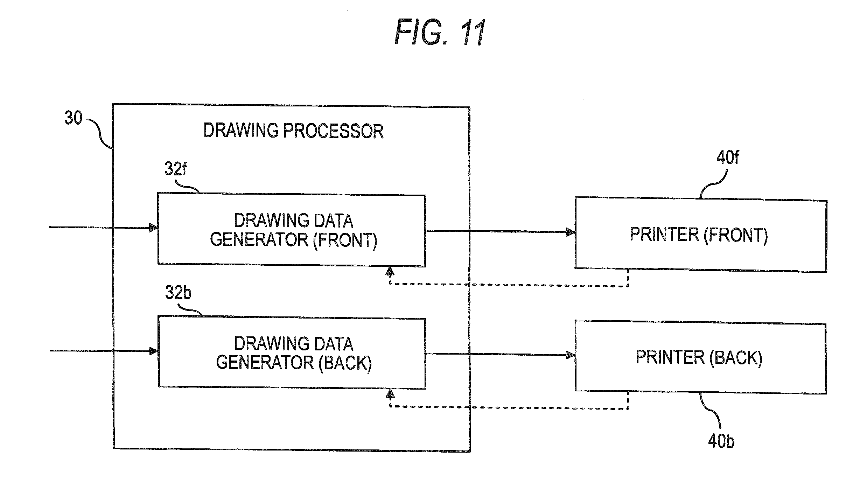

In the exemplary embodiments described above with reference to Figs. 1 to 10, the drawing processor 30 includes the drawing data generators 32 corresponding to the print engines 42 of the basic colors of one printer 40. In another exemplary embodiment, plural printers 40 may be connected to the drawing processor 30 and the drawing processor 30 may include the drawing data generators 32 corresponding to the plural printers 40. For example, when a printing operation is performed on both sides of a printing medium such as a sheet of paper, it can be considered that one printer 40 of two printers 40 performs the printing operation on one surface (front surface) of the printing medium and the other printer 40 performs the printing operation on the other surface (back surface) of the printing medium. In this case, the drawing processor 30 may include two drawing data generators 32f and 32b corresponding to two printers 40f and 40b performing the printing operation on the front surface and the back surface, respectively, as shown in Fig. 11. The inner configurations of the drawing data generators 32f and 32b may be the same as shown in Fig. 6. That is, the drawing data generators 32f and 32b each include an intermediate data acquiring unit 320, a drawing unit 322, a gamma correction/halftone processor 324, and the output buffer 326. The gamma correction/halftone processor 324 of the drawing data generators 32f and 32b each perform the gamma correction process using the parameters acquired from the printers 40f and 40b. In the system including the drawing processor 30 and the printers 40f and 40b shown in Fig. 11, the configuration of the print job processor 20 may the same as shown in Fig. 2.

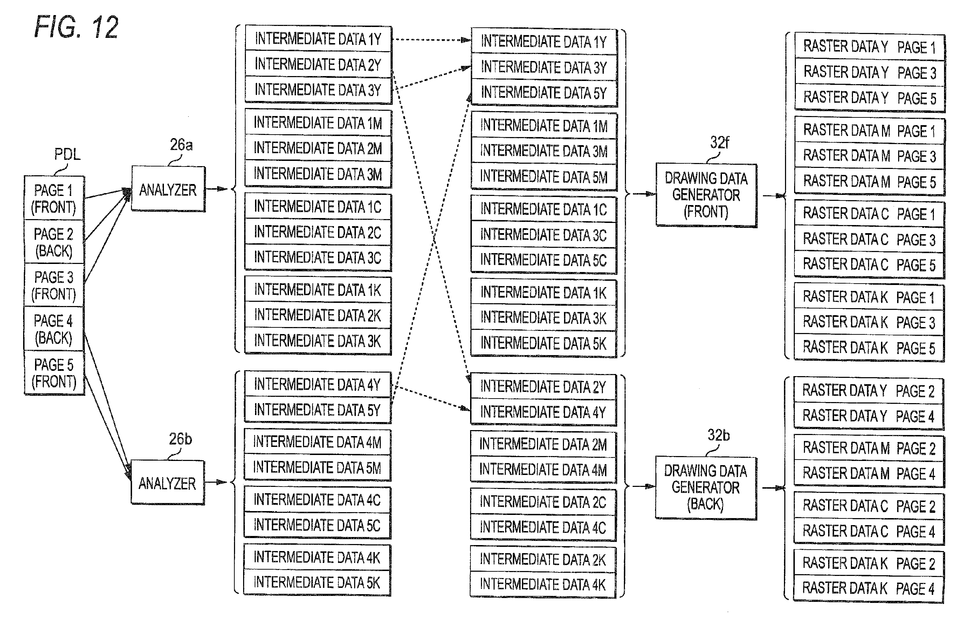

Fig. 12 shows an example of a flow of print job processing in the system including the drawing processor 30 and the printers 40f and 40b shown in Fig. 11. Fig. 12 shows an example where the print job including the PDL of a document five pages of Page 1 to Page 5 is processed when the print job processor 20 includes two analyzers 26a and 26b and the drawing processor 30 has the configuration shown in Fig. 11. The PDL shown in Fig. 12 includes a command instructing to print an odd page on the front surface of the printing medium and to print an even page on the back surface of the printing medium. The distribution processor 24 of the print job processor 20 determines the processing pages to be distributed to the analyzers 26a and 26b depending on the operating states of the analyzers 26a and 26b without distinguishing the front surface and the back surface of each page of the PDL. In the example shown in Fig. 12, the analyzer 26a takes charge of Pages 1, 2, and 3, and the analyzers 26b takes charge of Pages 4 and 5. The analyzers 26a and 26b generate the intermediate data, which is separated by the basic colors, for the corresponding pages. For example, the intermediate data generated by the analyzer 26a is the intermediate data of the basic colors of Y, M, C, and K for the corresponding pages of Pages 1, 2, and 3. The analyzers 26a and 26b output the intermediate data of the front page (odd page) out of the generated intermediate data to the drawing data generator 32f, and outputs the intermediate data of the back page (even page) to the drawing data generator 32b. Accordingly, the drawing data generator 32f corresponding to the printer 40f performing a front printing operation acquires the intermediate data of the basic colors Y, M, C, and K of the odd pages (Pages 1, 3, and 5), and the drawing data generator 32b corresponding to the printer 40b performing the back printing operation acquires the intermediate data of the basic colors Y, M, C, and K of the even pages (Pages 2 and 4). The raster data of the basic colors of the pages is generated using the intermediate data acquired by the drawing data generators 32f and 32b and the generated raster data is output to the printers 40f and 40b.

The document as a print target may include objects (figures, marks, characters, images, and the like) common to plural pages. For example, objects such as a frame line for defining the format of a document, a mark (such as a logo) indicating an enterprise or an organization having prepared the document, or a string (strings such as "important", "confidential", and "secret") indicating the type or secret level of the document may appear in commaon to plural pages of the document. In the below description, the common object is called "form". The PDL of the document including the form includes information such as the form such as information specifying an object serving as the form, information specifying the pages including the form, and information indicating the arrangement position and size of the form on the pages. An exemplary embodiment where the PDL of the document including the form is processed and printed will be described below.

In the exemplary embodiment where the PDL of the document including the form is processed, the configuration of the image processing system may be the same as the configuration shown in Fig. 1. The configuration of the print job processor 20 may be the same as the configuration shown in Fig. 2. However, the analyzers 26 of the print job processor 20 according to this exemplary embodiment distinguishes and generates the intermediate data of the form and the intermediate data of the objects other than the form in the corresponding page, when the form is included in the corresponding page.

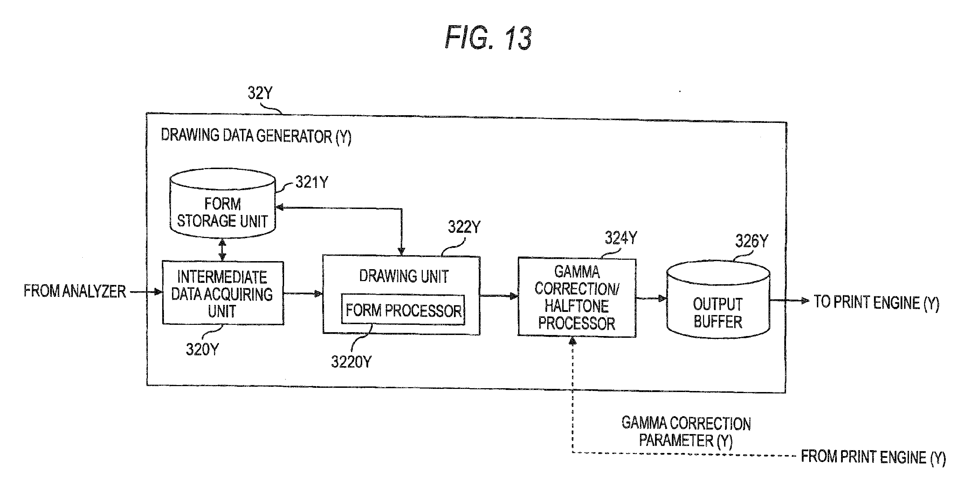

Fig. 13 shows a configuration of a drawing data generator 32 of the drawing data processor 30 according to this exemplary embodiment. Configurations of the drawing data generators 32 are shown in Fig. 13 using the drawing data generator 32Y. The drawing data generators 32M, 32C, and 32K corresponding to the other basic colors M, C, and K may have the same configuration as shown in Fig. 13. In Fig. 13, the same elements as the drawing data generator 32Y shown in Fig. 6 are referenced by the same reference numerals and signs as shown in Fig. 6, and the detailed description thereof is not repeated. The drawing data generator 32Y shown in Fig. 13 is different from the drawing data generator 32Y shown in Fig. 6, in that it includes a form storage unit 321Y and the drawing unit 322Y includes a form processor 3220Y. The form storage unit 321Y is a memory device storing information on the intermediate data of the form out of the intermediate data acquired from the analyzers 26 by the intermediate data acquiring unit 320Y. The form storage unit 321Y stores the drawing data of the form generated from the intermediate data of the form as the information on the form. Although described later in detail, the intermediate data of the form may be stored in the form storage unit 321Y. The form processor 3220Y of the drawing unit 322Y performs a process of compositing (assembling) the form into the drawing data, when it generates the drawing data of the page including the form. The process of assembling the form in to the drawing data will be described later in detail.

In this exemplary embodiment, the printer 40 includes the print engines 42Y, 42M, 42C, and 42K performing printing operations of the basic colors Y, M, C, and K, respectively, similarly to the example shown in Fig. 3.

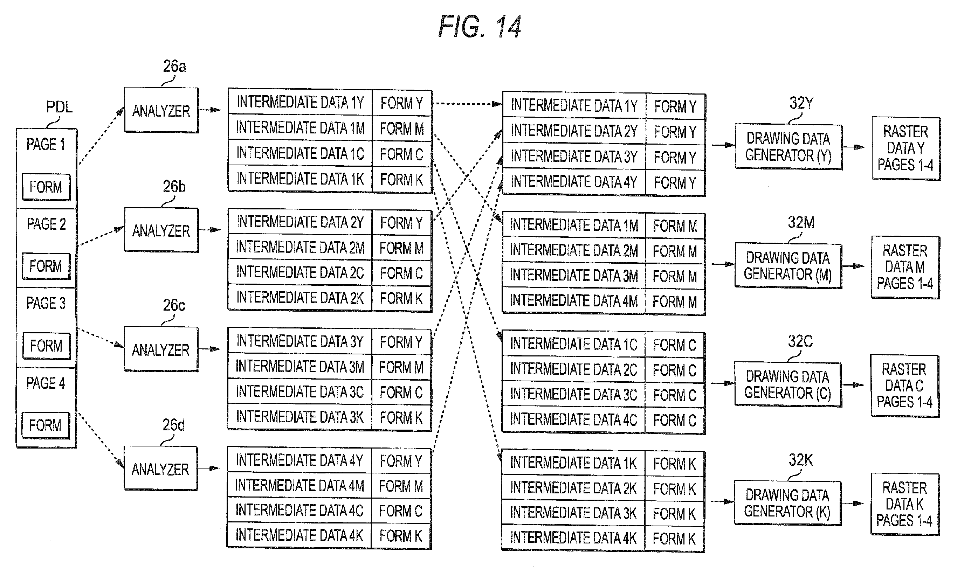

Fig. 14 shows a data processing flow in the analyzers 26 of the print job processor 20 and the drawing data generators 32 of the drawing processor 30 according to this exemplary embodiment. Fig. 14 shows an example where the PDL of a document including four pages of Page 1 to Page 4 and including a form common to the pages is processed. In the example shown in Fig. 14, four analyzers 26a to 26d take charge of Pages 1 to 4. The analyzers 26a to 26d analyze the PDL and specify the corresponding pages and the form in the corresponding pages. The analyzers generate the intermediate data (form Y, form M, form C, and form K) of the form separated by the basic colors Y, M, C, and K and the intermediate data (data 1Y, 1M, ...) of the objects having different forms in the corresponding pages. The intermediate data 1Y, 1M,... and forms Y, M, C, and K generated by the analyzers 26a to 26d are output to the drawing data generators 32Y, 32M, 32C, and 32K corresponding to the basic colors. Therefore, the drawing data generators 32Y, 32M, 32C, and 32K acquire the intermediate data of Pages 1 to 4 of the corresponding basic colors and the intermediate data of the form of the corresponding basic colors output from the analyzers 26. The drawing data generators 32 generate the raster data of the pages including the form by the corresponding basic colors using the acquired intermediate data, and output the generated raster data to the corresponding print engines 42.

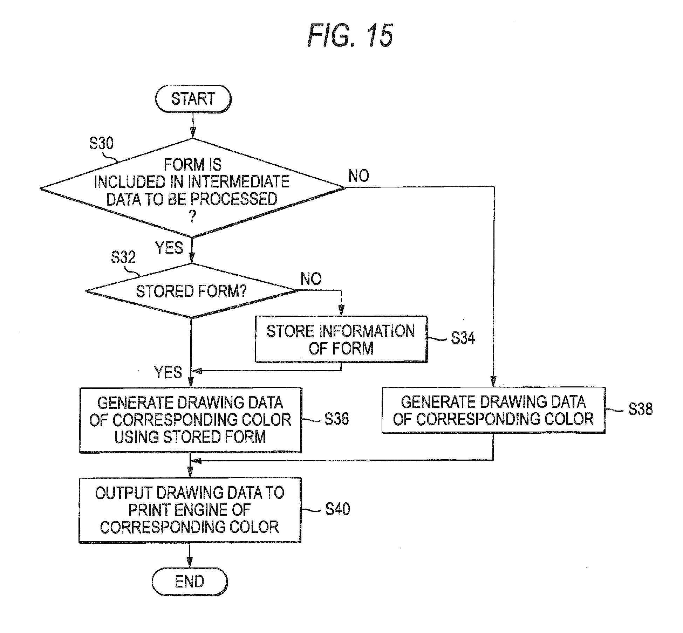

Fig. 15 is a flowchart illustrating a flow of processes performed by the drawing data generators 32 according to this exemplary embodiment. The drawing data generators 32 start the flow of processes shown in Fig. 15, when they acquire the intermediate data output from the analyzers 26. The flow of processes shown in Fig. 15 will be described below when the intermediated data shown in Fig. 14 is acquired by the drawing data generators 32.

When the intermediate data of the form is included in the acquired intermediate data (the intermediate data to be processed) (YES in step S30), the intermediate data acquiring unit 320 of each drawing data generator 32 determines whether the information on the form is stored in the form storage unit 321 (step S32) with reference to the form storage unit 321. In this example referring to Fig. 14, since the form is included in the intermediate data to be processed, the determination of step S32 is performed.

When the information of the form included in the intermediate data to be processed is not stored in the form storage unit 321 (NO in step S32), the information of the form is stored in the form storage unit 321 (step S34). When the information of the form is stored (YES in step S32), the process of step S34 is skipped and the process of step S36 is performed. In this example referring to Fig. 14, the intermediate data of the same form is output to the drawing data generators 32 from the analyzers 26a to 26d. Accordingly, when the intermediate data earliest acquired by the drawing data generators 32 out of the intermediate data (including the form) output from the analyzers 26a to 26d is to be processed, NO is determined in step S32 and the process of storing the information of the form in the form storage unit 321 (step S34) is performed.

Regarding the information of the form stored in the form storage unit 321 in step S34, the acquired intermediate data of the form is processed by the drawing unit 322 to generate the drawing data of the form, and the generated drawing data is stored in the form storage unit 321 as the information of the form. In this case, the drawing data may the drawing data having been subjected to the gamma correction process and the halftone process by the gamma correction/halftone processor 324 or may be the drawing data not having been subjected to the gamma correction process and the halftone process.

After step S34 or after YES is determined in step S32, the drawing unit 322 generates the drawing data including the form using the information of the form stored in the form storage unit 321 (step S36). When the drawing data of the form not having been subjected to the gamma correction process and the halftone process is stored in the form storage unit 321, the form processor 3220 of the drawing unit 322 first writes the drawing data stored in the form storage unit 321 to a drawing data forming buffer (not shown) in step S36. Then, the drawing unit 322 synthesizes and writes the drawing data to the buffer to which the drawing data of the form has been written, based on the intermediate data of the objects having different forms in the pages (overlay process). Accordingly, the drawing data of the page including the form is generated. The drawing data is subjected to the gamma correction process and the halftone process by the gamma correction/halftone processor 324 and the resultant drawing data is written to the output buffer 326. The form may be disposed as a background image in the lowermost of the print image or may be disposed in the uppermost of the print image. The setting may be described in the PDL and may be included in the intermediate data of the form.

In another example of the process of step S36, when the drawing data of the form having been subjected to the gamma correction process and the halftone process is stored in the form storage unit 321, the drawing unit 322 generates the drawing data of the objects having different forms in the pages and performs the gamma correction process and the halftone process thereon. The drawing data generated by performing the overlay process on the drawing data of the objects having the different forms and the drawing data of the form stored in the form storage unit 321 is written to the output buffer 326.

When the generation of the drawing data is finished, the drawing data is output from the output buffers 326 to the print engines 42 of the corresponding basic colors (step S40).

When the intermediate data of the form is not included in the intermediate data to be processed (NO in step S30), the drawing data is generated by the drawing unit 322 using the intermediated data and is processed by the gamma correction/halftone processor 324 (step S38), similarly to the example shown in Fig. 6 where the form is not processed, and the resultant drawing data is output to the printing engines 42 of the corresponding basic colors (step S40).

In the exemplary embodiment described with reference to Figs. 14 and 15, the analyzers 26 generate the intermediate data (forms Y, M, C, and K) of the same form and output the generated intermediate data to the drawing data generators 32 of the basic colors in processing the PDL of the document including the form. In another exemplary embodiment, one of the analyzers 26 may be determined as the analyzer 26 taking charge of the generation of the intermediate data of the form and only the determined analyzer 26 may generate the intermediate data of the form. For example, a condition for taking charge of the generation of the intermediate data of the form is set in advance in the analyzers 26 and it is determined based on the condition whether the intermediate data of the form should be generated by the analyzers 26. The condition may be defined such as "the intermediate data of the form is generated when it takes charge of the processing of the page first appearing in the document out of the pages including the form". Alternatively, the analyzer 26 taking charge of the generation of the intermediate data of the form may be determined by the distribution processor 24 and the result may be sent to the corresponding analyzer 26. In this case, the analyzer 26 having been notified that it should take charge of the generation of the intermediate data of the form generates the intermediate data of the form and the analyzers 26 not having been notified do not generate the intermediate data of the form.

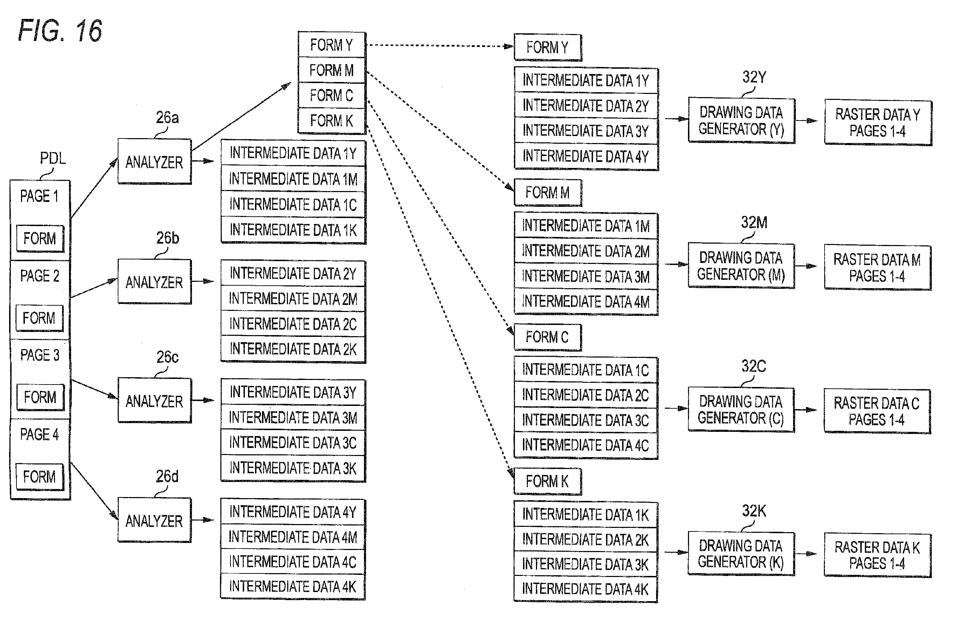

Fig. 16 shows the intermediate data generated by the analyzers 26 and the intermediate data acquired by the drawing data generators 32 according to this exemplary embodiment. In Fig. 16, the configuration of the PDL to be processes is the same as shown in Fig. 14. In the example shown in Fig. 16, the analyzer 26a processing Page 1 which is the first page including the form takes charge of the generation of the intermediate data of the form. Accordingly, only the analyzer 26a generates the intermediate data of the form and the other analyzers 26b, 26c, and 26d taking charge of the processing of the different pages (Pages 2, 3, and 4) do not generate the intermediate data of the form. The drawing data generators 32Y, 32M, 32C, and 32K acquire the intermediate data (forms Y, M, C, and K) of the form of the basic colors from the analyzer 26a.

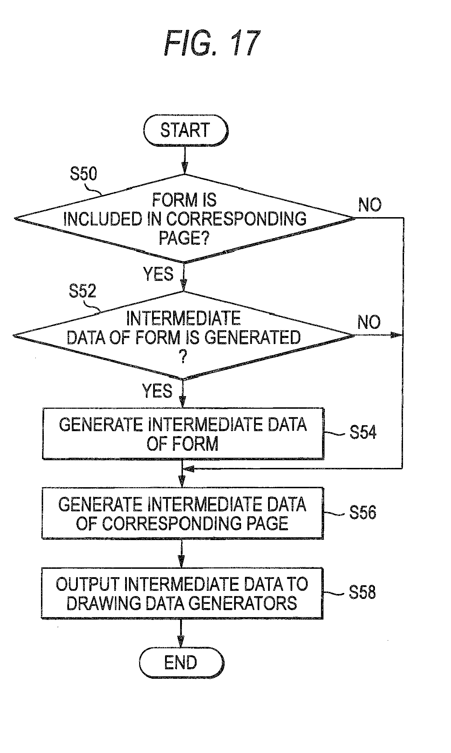

Fig. 17 shows a flow of processes performed by the analyzers 26 in the example shown in Fig. 16. When the corresponding pages are notified from the distribution processor 24 and the PDL to be processed is acquired, the analyzers 26 start the flow of processes shown in Fig. 17. Referring to Fig. 17, first, the intermediate data generators 260 of the analyzers 26 analyze the PDL to be processed, specify the corresponding pages, and determines whether a form is included in the corresponding pages (step S50).

When the form is included in the corresponding pages (YES in step S50), the intermediate data generators 260 determine whether the intermediate data of the form should be generated (step S52). The determination of step S52 is made, for example, depending on whether a predetermined condition is satisfied. For example, when the above-mentioned condition "the intermediate data of the form is generated when it takes charge of the processing of the page first appearing in the document out of the pages including the form" is defined in advance, the intermediate data generators specify whether the corresponding page is the first page including the form based on the analysis result of the PDL. When the corresponding page is the first page, the above-mentioned condition is satisfied. Accordingly, the intermediate data generators 260 determine that it should generate the intermediate data of the form (YES in step S52) and generate the intermediate data of the form (step S54). At this time, the intermediate data generator generates the intermediate data of the form separated by the basic colors Y, M, C, and K. On the other hand, when the corresponding page is not the first page, the above-mentioned condition is not satisfied. Accordingly, the intermediate data generator determines that it should not generate the intermediate data of the form (NO in step S52), does not perform the process of step S54, and performs the process of step S56. For example, when the distribution processor 24 determines and notifies the analyzer 26 taking charge of the generation of the intermediate data of the form, the determination of step S52 can be made depending on whether the notification is received from the distribution processor 24. When the notification of taking charge of the generation of the intermediate data of the form is received, YES is determined in step S52 and the intermediate data of the form is generated (step S54). When the notification is not received, NO is determined in step S52 and the process of step S56 is performed.

In step S56, the intermediate data generators 260 generate the intermediate data of the corresponding pages separated by the basic colors Y, M, C, and K. In step S56, the intermediate data of the objects having different forms in the corresponding pages are generated, not depending on whether the form is included in the corresponding pages. The intermediate data of the basic colors generated in step S56 further includes the information indicating whether the form is included in the pages corresponding to the intermediate data.

When the intermediate data of the corresponding pages is generated, the generated intermediate data of the basic colors of the corresponding pages is output to the drawing data generators 32 of the corresponding basic colors from the intermediate data output units 262 (step S58). When the intermediate data generators 260 generate the intermediate data of the form as well as the intermediate data of the corresponding pages (step S54), the intermediate data of the form of the basic colors is also output to the drawing data generators 32 of the corresponding basic colors in step S58.

According to the flow shown in Fig. 17, as shown in Fig. 16, only the analyzer 26 taking charge of the generation of the intermediate data of the form generates the intermediate data of the form and the intermediate data of the corresponding page and the other analyzers 26 generate only the intermediate data of the corresponding pages.

When the intermediate data of the form is acquired, the drawing data generators 32 shown in Fig. 16 store the acquired information of the form in the form storage unit 321. At this time, the acquired intermediate data itself may be stored in the form storage unit 321. Alternatively, similarly to the above-mentioned example, the information of the form may be generated from the intermediate data from which the drawing data of the form is acquired (in the state before or after the gamma correction process and the halftone process) and may be stored in the form storage unit 321.

In the example shown in Fig. 16, the flow of processes of generating the drawing data from the intermediate data in the drawing data generators 32 may be almost the same as described above with reference to Fig. 15. The part of the process flow of the drawing data generators 32 shown in Fig. 16 different from the description with reference to Fig. 15 will be described below. In the example shown in Fig. 16, the drawing data generators 32 determines whether the form is included in the intermediate data to be processed (step S30) with reference to the information of the intermediate data indicating whether it includes the form, instead of determining whether the intermediate data of the form is acquired along with the intermediate data of the pages. When the form is included in the intermediate data and the information of the form is not stored in the form storage unit 321 (NO in step S32), the output of the intermediate data of the form from the analyzer 26 having generated the intermediate data of the form is waited for, instead of performing the process of step S34 in Fig. 15. When the intermediate data of the form is acquired, the information of the form is stored in the form storage unit 321 and the processes of step S36 and steps subsequent thereto are performed. For example, when the intermediate data of the form is not acquired in a predetermined time, an error message is output and the flow of processes may be ended. When the intermediate data of the form is stored in the form storage unit 321, the drawing data is generated from the intermediate data of the form in step S36, and the drawing data is generated by the overlay process using the intermediate data corresponding to the pages in the document.

The example where the PDL of the document including one type of form is processed is described above with reference to Figs. 13 to 17. An example where the PDL of the document including different types of forms is processed will be described below.

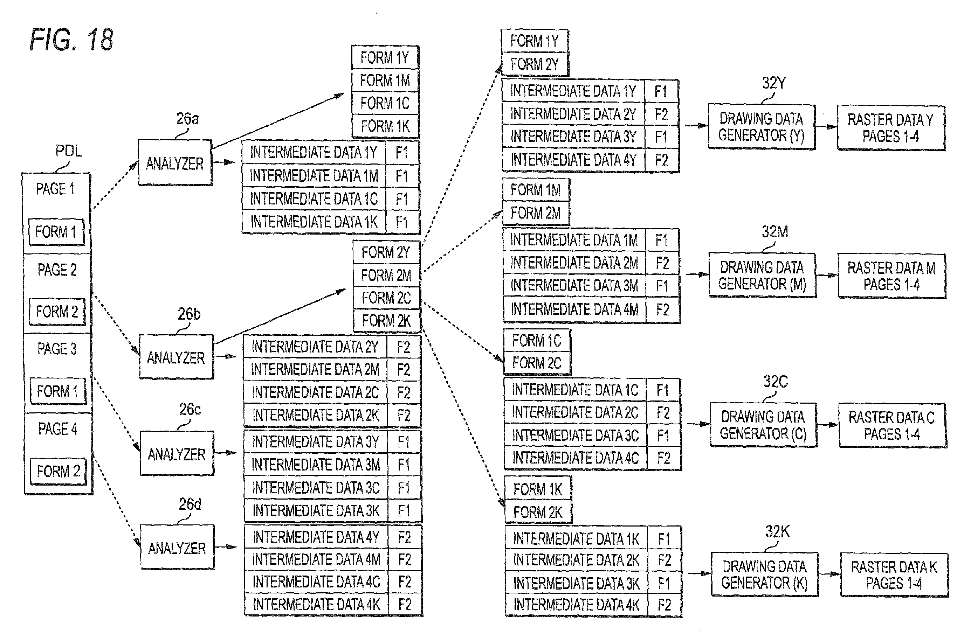

Fig. 18 shows a data processing flow in the analyzers 26 and the drawing data generators 32 when the PDL of the document including two types of forms of "form 1" and "form 2" is processed. In the example shown in Fig. 18, form 1 is included in Pages 1 and 3 of the PDL and form 2 is included in Pages 2 and 4. Pages 1 to 4 are processed by the analyzers 26a to 26d, respectively. It is assumed that the analyzer 26a taking charge of the processing of Page 1 in which form 1 first appears generates the intermediate data of form 1 and the analyzer 26b taking charge of the processing of Page 2 in which form 2 first appears generates the intermediate data of form 2. The analyzers 26 correlate the identification information of the form included in the corresponding pages with the intermediate data 1Y, 1M, ... of the basic colors generated for the objects having different forms in the corresponding pages and outputs the correlated data to the drawing data generators 32 of the corresponding basic colors. In Fig. 18, the identification information of form 1 is represented by "FI" and the identification information of form 2 is represented by "F2". The identification information of the form may be correlated as data different from the intermediate data with the intermediate data or may be included in the intermediate data of the basic colors.

When acquiring the intermediate data of the form, the drawing data generators 32 shown in Fig. 18 stores the information of the form (the intermediate data itself or the drawing data) in the form storage unit 321 in correlation with the identification information of the form. When the intermediate data correlated with the identification information of the form is processed, the information of the form correlated with the identification information of the form is read from the form storage unit 321 and the drawing data including the form is generated by the above-mentioned overlay process using the read information of the form.

In the examples with reference to Figs. 13 to 18, the form is disposed in the lowermost (or the uppermost) of the print image in processing the drawing data of the form. In another exemplary embodiment where the PDL of the document including the form is processed, the intermediate data further including information of the hierarchical relation in the print image between the form and other objects may be generated by the analyzers 26 and the drawing data reproducing the hierarchical relation indicated by the information may be generated by the drawing data generators 32.

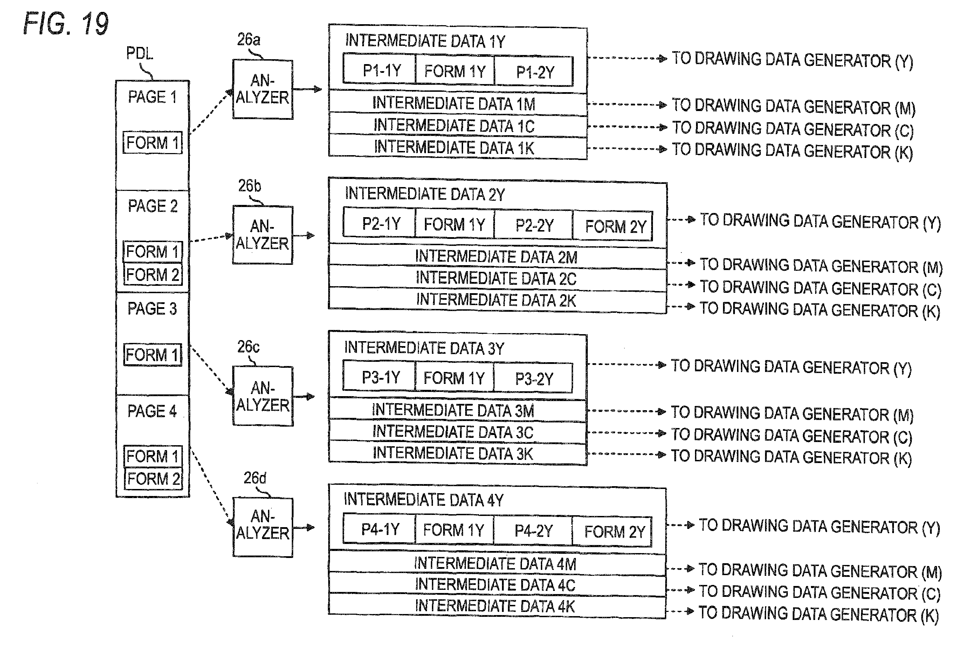

Fig. 19 shows an example of the configuration of the intermediate data generated by the analyzers 26 according to this exemplary embodiment. In the example shown in Fig. 19, the PDL to be processed is a PDL of a document including four pages of Pages 1 to 4. Form 1 is included in the pages of Page I and Page 3 and form 1 and form 2 are included in the pages of Page 2 and Page 4. In this example, the analyzers 26 generate the intermediate data in which the drawing commands of the object of the form and the object of the different form in the corresponding pages are described in the arrangement sequence (from down to up or from up to down) in the print image. Referring to the intermediate data 1Y in Fig. 19, reference sign P1-1Y represents the drawing command of the basic color Y of the object arranged below (or above) of form 1 in Page 1, form 1Y represents the drawing command of the basic color Y of form 1, and reference sign P1-2Y represents the drawing command of the basic color Y of the object arranged above (or below) form I in Page 1. Although not shown in Fig. 19, the intermediate data 1M, 1C, and 1K has the same configuration as the intermediate data 1Y. Similarly, referring to the intermediate data 2Y, the objects represented by the drawing commands of reference sign P2-1Y, form 1Y, reference sign P2-2Y, and form 2Y are arranged in this order from up to down (or from down to up) in the print image. The configurations of the intermediate data 3Y and 4Y is the same as the configurations of the intermediate data 1Y and 2Y The intermediate data is output to the drawing data generators 32 corresponding to the basic colors. The drawing data generators 32 generate the drawing data of the pages of the intermediate data based on the hierarchical relation of the object and the form expressed by the acquired intermediate data. At this time, when the drawing data of the form is generated, the drawing data generators 32 store the generated drawing data of the form in the form storage unit 321 in correlation with the identification information of the form. When the form stored in the form storage unit 321 is included in the intermediate data to be processed at the time of processing the intermediate data of a different page, the process of generating the drawing data of the form from the intermediate data of the form is not performed and the drawing data of the page is generated using the drawing data of the form stored in the form storage unit 321.

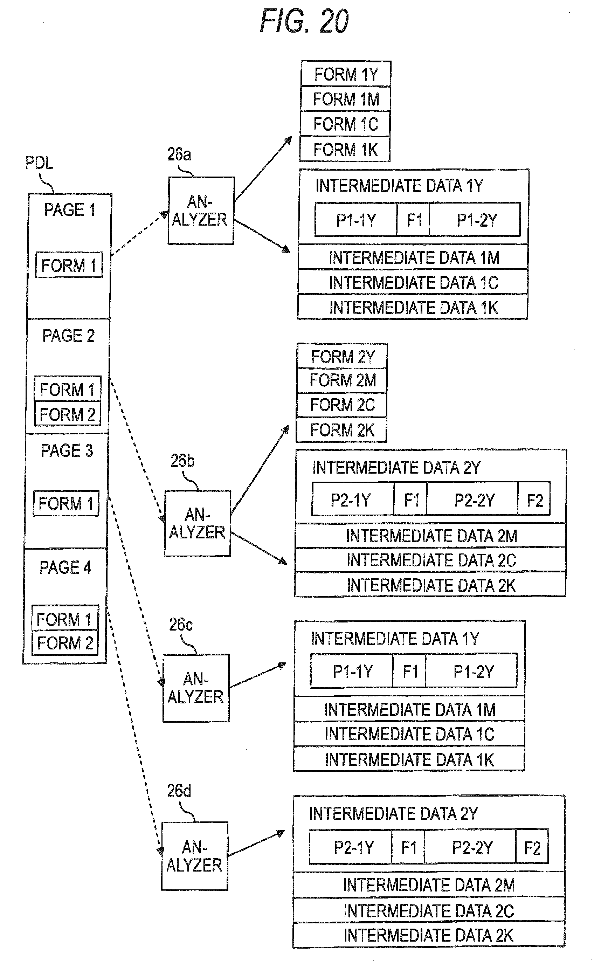

Fig. 20 shows an example where the intermediate data of the form is generated by only one analyzer 26 at the time of generating the intermediate data expressing the hierarchical relation of the form and the different object. In the example shown in Fig. 20, the same PDL as the PDL shown in Fig. 19 is to be processed. In Fig. 20, the analyzer 26a takes charge of the generation of the intermediate data of form 1 and the analyzer 26b takes charge of the generation of the intermediate data of form 2. The intermediate data 1Y, 1M, ... generated by the analyzers 26 includes the identification information of the form but does not include the intermediate data of the form. The intermediate data 1Y in Fig. 20 states that the object represented by the drawing command of reference sign P1-1Y, form 1 (the identification information F1), and the object represented by the drawing command of reference sign PI-2Y are arranged sequentially from down to up (or from up to down) in the print image. The intermediate data 2Y states that the object represented by the drawing command of reference sign P2-1Y, form 1 (the identification information of F1), the object represented by the drawing command of reference sign P2-2Y, and form 2 (the identification information F2) are arranged sequentially from down to up (or from up to down). The intermediate data of the form and the intermediate data 1Y and 1M are output to the drawing data generators 32 of the corresponding basic colors, similarly to the above-mentioned exemplary embodiments. When the intermediate data of the form is acquired, the drawing data generators 32 store the information of the form (the intermediate data itself or the drawing data) in the form storage unit 321 in correlation with the identification information of the form. When processing the intermediate data 1Y, 1M, ..., the drawing data generators 32 refer to the identification information included in the intermediate data, read the information of the corresponding form from the form storage unit 321, and then generate the drawing data in accordance with the hierarchical relation expressed by the intermediate data.

The above-mentioned exemplary embodiments are not limited to the above descriptions, but may be modified in various forms. For example, although it has been described above that four colors of Y, M, C, and K are used as the basic colors for printing, other colors may be used as the basic colors, or the processes of the above-mentioned exemplary embodiments are embodied as described above even when five or more colors or three or less colors are used. Although the system including the analyzers 26 and the drawing data generators 32 with the same number has been described above, the number of analyzers 26 and the number of drawing data generators 32 may not be equal to each other.

For example, in the exemplary embodiment in which the raster data is generated as the drawing data, the run-length data may be generated instead of the raster data. On the contrary, in the exemplary embodiment in which the run-length data is generated as the drawing data, the raster data may be generated instead of the run-length data.

For example, when the raster data is generated as the drawing data by the drawing data generators 32, the analyzers 26 may generate the run-length data as the intermediate data instead of the data described with reference to Figs. 3 and 4.

In the above-mentioned exemplary embodiments, the drawing data generators 32 write the drawing data in the unit of pages to the output buffer 326, but may write the drawing data in the unit of bands, which are obtained by further dividing the pages, to the output buffer 326.

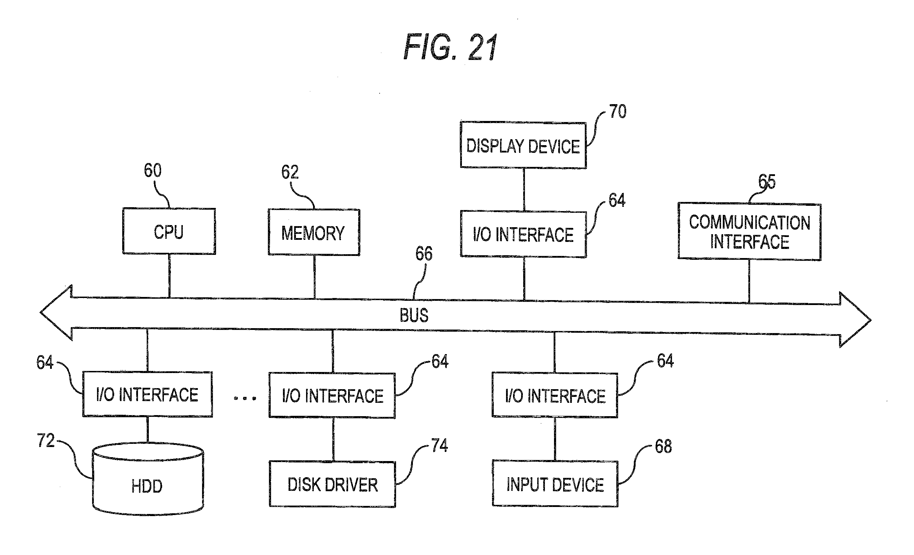

The print job processor 20 and the drawing processor 30 in the above-mentioned exemplary embodiments are embodied by causing a computer having, for example, a hardware configuration shown in Fig. 21 to execute programs describing the functions or the process details of the print job processor 20 and the drawing processor 30. The computer shown in Fig. 21 has a configuration in which a CPU (Central Processing Unit) 60, a memory (primary memory) 62, various I/O (Input/Output) interfaces 64, and a communication interface 65 as hardware are connected to each other via a bus 66. The computer transmits and receives data to and from other devices via the communication interface 65. An input device 68 such as a keyboard or a mouse and a display device 70 such as a CRT (Cathode Ray Tube) or a liquid crystal display are connected to the bus 66, for example, via the I/O interfaces 64. An HDD (Hard Disc Driver) 72 or a disk driver 74 reading a portable non-volatile recording medium of various standards, such as a CD, a DVD, or a flash memory, are connected to the bus 66 via the I/O interfaces 64. The drivers 72 and 74 serve as an external storage device for the memory. The programs describing the processing details of the exemplary embodiments are stored in the fixed storage device such as the HDD 72 via the recording medium such as a CD or a DVD or via a network and are then installed in the computer. The programs stored in the fixed storage device are read into the memory 62 and are executed by the CPU 60, whereby the processes of the above-mentioned exemplary embodiments are carried out.

Partial functions of the print job processor 20 and the drawing processor 30 may be embodied by hardware processes using a circuit such as an ASIC (Application Specific Integrated Circuit), not by software processes resulting from the execution of the programs. For example, a circuit performing the processes of the gamma correction/halftone processor 324 included in the drawing data generators 32 of the drawing processor 30 may be constructed in advance and may be connected to the bus 66 of the computer shown in Fig. 19, whereby the gamma correction process and the halftone process may be performed by the circuit.

The print job processor 20, the drawing processor 30, and the printer 40 described above may not be individual devices. For example, the functions of the elements of the drawing processor 30 may be embodied as a part of a controller included in the printer 40. The print job processor 20 and the drawing processor 30 may be embodied by plural computers, not by only one computer. For example, the plural analyzers 26 and the plural drawing data generators 32 may be embodied by plural computers connected to each other.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An image processing system comprising:
a plurality of intermediate data generating sections that analyze distributed data of document data described in a page description language, and generate intermediate data; and
a plurality of drawing data generating sections that acquire the intermediate data from the plurality of intermediate data generating sections and generate drawing data including information of pixels of a print image based on the acquired intermediate data,
wherein the plurality of intermediate data generating sections generate the intermediate data by pages of the document data, and
wherein the plurality of drawing data generating sections correspond to a plurality of different basic colors and generate the drawing data for the corresponding basic colors.

2. The image processing system according to claim 1,
wherein the plurality of intermediate data generating sections generate the intermediate data of the pages by the plurality of different basic colors and output the intermediate data of the basic colors to the drawing data generating sections corresponding to the basic colors, respectively, and
wherein the plurality of drawing data generating sections acquire the intermediate data of the corresponding basic colors from the plurality of intermediate data generating sections, respectively, and generate the drawing data of the corresponding basic colors using the acquired intermediate data.

3. The image processing system according to claim 1,
wherein the plurality of intermediate data generating sections generate the intermediate data of the pages by the plurality of different basic colors and output all the generated intermediate data to the plurality of drawing data generating sections, and
wherein the plurality of drawing data generating sections generate the drawing data of the corresponding basic colors using the intermediate data of the corresponding basic colors out of the intermediate data acquired from the plurality of intermediate data generating sections.

4. The image processing system according to any one of claims 1 to 3,
wherein the plurality of intermediate data generating sections generate the intermediate data further including information for specifying common elements which are elements in common in the pages of the document data out of the elements of the document data,
wherein the plurality of drawing data generating sections,
(i) each includes a storage section that stores the drawing data generated in accordance with a drawing command for the common elements included in the acquired intermediate data,
(ii) store the drawing data of the common elements in the storage sections when the drawing data of the common elements included in the intermediate data to be processed from which the drawing data is generated is not stored in the storage sections, and
(iii) generate the drawing data using the drawing data read from the storage sections when the drawing data of the common elements included in the intermediate data to be processed from which the drawing data is generated is stored in the storage sections.

5. The image processing system according to claim 4,
wherein one intermediate data generating section determined in accordance with a predetermined condition out of the plurality of intermediate data generating section that generate the intermediate data of the pages including the common elements in the document data generates the drawing command of the common elements and outputs the drawing command to the plurality of drawing data generating sections, and
the other intermediate data generating sections do not generate the drawing command of the common elements.

6. The image processing system according to claim 5,
wherein the plurality of drawing data generating sections store the drawing command of the common elements generated by the one intermediate data generating section in the storage sections, and
wherein the plurality of drawing data generating sections generate the drawing data using the drawing commands read from the storage sections when the drawing commands of the common elements included in the intermediate data to be processed from which the drawing data is generated are stored in the storage sections.

7. The image processing system according to any one of claims 4 to 6,
wherein the intermediate data further includes information indicating a hierarchical relation in the print image between the elements of the document data including the common elements, and
wherein the plurality of drawing data generating sections generate the drawing data further based on the information indicating the hierarchical relation included in the intermediate data.

8. The image processing system according to any one of claims 1 to 7,
wherein the intermediate data includes the drawing command indicating a drawing sequence of scanning lines included in the drawing data of each element of the document data.

9. An information processing method comprising:
by a plurality of intermediate data generating sections, analyzing distributed data of document data described in a page description language, and generating intermediate data; and
by a plurality of drawing data generating sections, acquiring the intermediate data from the plurality of intermediate data generating sections and generating drawing data including information of pixels of a print image based on the acquired intermediate data,
wherein the plurality of intermediate data generating sections generate the intermediate data by pages of the document data, and
wherein the plurality of drawing data generating sections correspond to a plurality of different basic colors and generate the drawing data for the corresponding basic colors.

10. A program causing a computer to execute a process for processing print data in parallel, the process comprising:
by a plurality of intermediate data generating sections, analyzing distributed data of document data described in a page description language, and generating intermediate data; and
by a plurality of drawing data generating sections, acquiring the intermediate data from the plurality of intermediate data generating sections and generating drawing data including information of pixels of a print image based on the acquired intermediate data,
wherein the plurality of intermediate data generating sections generate the intermediate data by pages of the document data, and
wherein the plurality of drawing data generating sections correspond to a plurality of different basic colors and generate the drawing data for the corresponding basic colors.
